# EUROPEAN PATENT APPLICATION

(11) **EP 0 716 981 A1**
(43) Date of publication of application: **19.06.1996**
(21) Application number: 95203227.4
(22) Date of filing: 23.11.1995
(51) Int. Cl.: B64F 1/12

(54) **Apparatus consisting of a cross-piece for gripping and raising, orienting and transporting helicopters in particular for ship decks**

(30) Priority: 13.12.1994 IT MI942509; 08.11.1995 IT MI952298
(71) Applicant: RIVA CALZONI S.p.A., Bologna (IT)
(72) Inventor: Ortelli, Aurelio, Bologna (IT)
(74) Representative: Raimondi, Alfredo, Dott. Ing. Prof.

(57) **Abstract**

Apparatus for gripping, raising, orienting and transporting helicopters in particular for the decks of ships provided with longitudinal rails (4) for guiding and constraining in an anti-tilting manner roller wheels (5a) supporting the apparatus itself consisting of a cross-piece (6), the longitudinal arm of which is movable in a direction parallel to the longitudinal axis (X-X) of the ship in engagement with said rail, the transverse arm of said cross-piece having joined to it a U-shaped frame (7) which has parallel arms arranged parallel to the longitudinal axis (X-X) and is movable with respect to the cross-piece in a transverse direction with respect to the said axis (X-X) through the action of associated actuating means, the free ends of said arms having joined to them the means (10) for gripping the main wheels of the helicopter with associated orienting devices and means for raising the said ends once coupling and gripping of the wheels themselves has been performed.

## Description

The present invention relates to an apparatus consisting of a cross-piece for gripping and raising, orienting and translating helicopters of the wheeled type, in particular on board ships, platforms and the like.

It is known that the widespread use of helicopters on board ships poses the need for transporting a helicopter from a landing area, located on the deck itself, into a hangar situated on the deck of the ship itself.

This operation, however, is particularly complicated owing to numerous factors which result in a high degree of unpredictability as regards both the landing position on the deck and the relative position of the helicopter, the deck itself and the hangar entrance; in addition, the manoeuvre must be able to be carried out in a totally safe manner both for the helicopter and for the ship's crew, even under extremely hazardous conditions involving, for example, high winds and/or rough seas which cause pitching and rolling of the ship, resulting in an unstable equilibrium of the helicopter.

Certain technical solutions are also known, whereby use is made of a carriage which is movable on deck in a direction substantially parallel to the longitudinal axis of the ship and to which the helicopter must be hitched up after landing so that the carriage itself, by means of suitable devices, is able to transport the helicopter to the hangar.

Such devices, however, have certain drawbacks, including the fact that it is particularly difficult, especially during adverse weather conditions, to couple the helicopter to the carriage if the helicopter, after landing, is not properly positioned and has its longitudinal axis rotated with respect to the longitudinal axis of the ship.

The publication EP 0,518,405 in the name of the same Applicant also discloses an apparatus for gripping, handling and transporting helicopters in particular on board platform ships and the like, which comprises a pair of gripping members arranged parallel to the longitudinal axis of the ship and designed to translate transversely with respect to said axis, in engagement with corresponding transverse guiding means fixed to the deck, and to assume an angled, but mutually parallel position with respect to said guiding means, via the action of mutually independent operating means. Said apparatus, which enables the helicopter to be brought into the correct position for subsequent coupling to the carriage for longitudinal transportation towards the hangar, is particularly versatile and suitable for use with both helicopters of the runner type and helicopters of the wheeled type, but has complex mechanisms, operating devices and associated control devices which also require additional modifications to be made to the structure of the ship for example in order to fit the transverse guides.

The technical problem which is posed, therefore, is that of providing a simple and reliable apparatus suitable for hitching and raising a helicopter of the wheeled type in order to transport it, from any position inside a well-defined landing area on the deck of a ship, into a position where it is correctly oriented and aligned with respect to longitudinal guides provided on the deck of the ship itself for subsequent transportation towards the hangar, whereby such an operation must be able to be carried out as easily as possible and repeated whatever the relative position of the helicopter, inside the landing area and with respect to the longitudinal axis of the ship. This operation must also be able to be carried out automatically, and/or manually, but without operating personnel present on the deck in the vicinity of the landing zone, and allow the apparatus itself to be kept under cover inside the hangar until the moment when it is actually used for recovery of the helicopter.

These results are obtained by the present invention, which provides an apparatus for gripping and raising, orienting and transporting helicopters in particular for the decks of ships provided with longitudinal rails for guiding and constraining in an anti-tilting manner roller wheels connected to the apparatus, which consists of a cross-piece movable in a direction parallel to the longitudinal axis (X-X) of the ship in engagement with said rail, the transverse arm of said cross-piece having joined to it a U-shaped frame which has parallel arms arranged parallel to the longitudinal axis (X-X) and is movable relative to the cross-piece in a transverse direction with respect to the longitudinal axis (X-X) itself through the action of associated actuating means; the free ends of said longitudinal arms of the frame have joined to them the means for gripping the main wheels of the helicopter with associated orienting devices and means for raising the said ends once coupling and gripping of the wheels themselves has been performed.

Further details can be obtained from the following description, with reference to the accompanying drawings, in which:
Figure 1 shows a plan view of the ship provided with the apparatus according to the invention;
Figure 2 shows a partial plan view of a detail of the apparatus according to the invention;
Figure 3 shows a schematic cross-section along the plane indicated by III-III in Fig. 2;
Figure 4 shows a schematic cross-section through the means for gripping and orienting the helicopter;
Figure 5 shows a schematic cross-section along the plane indicated by V-V in Fig. 4;
Figure 6 shows an alternative example of embodiment of the helicopter gripping device;
Figures 7a,b,c,d,e,f,g,h show the sequence for moving the helicopter by means of the apparatus according to the invention;
Figure 8 is a plan view of an alternative embodiment of the U-shaped frame according to the invention;
Figure 9 is a view of a further embodiment of the device for gripping the wheels of the helicopter, applied to the frame of Fig. 8; and
Figure 10 is a view of the alternative gripping device applied to the entire U-shaped frame of Fig. 2.

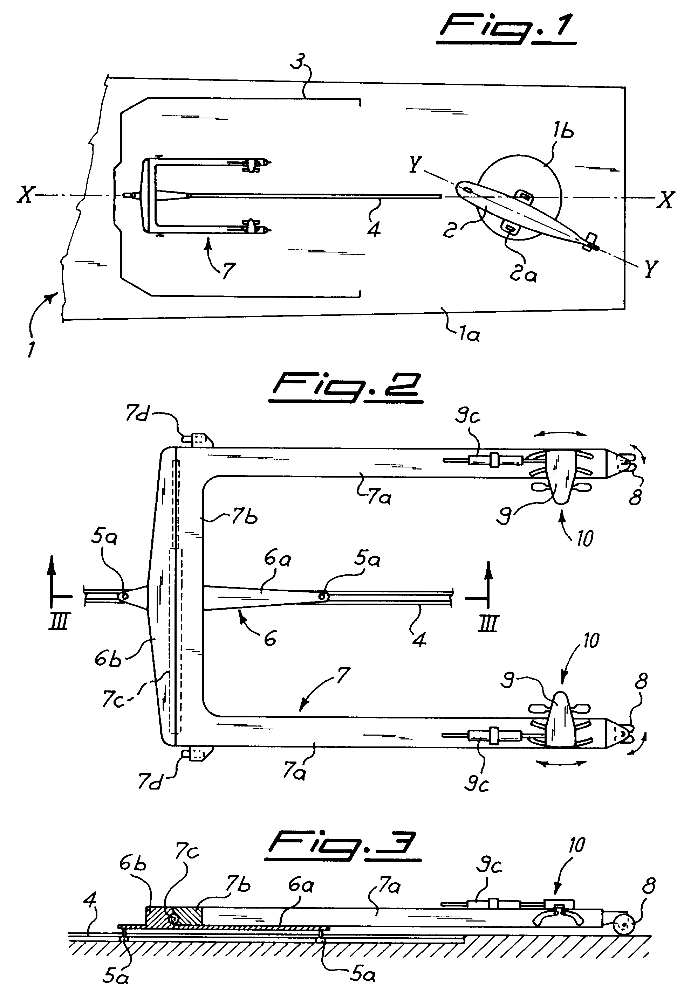

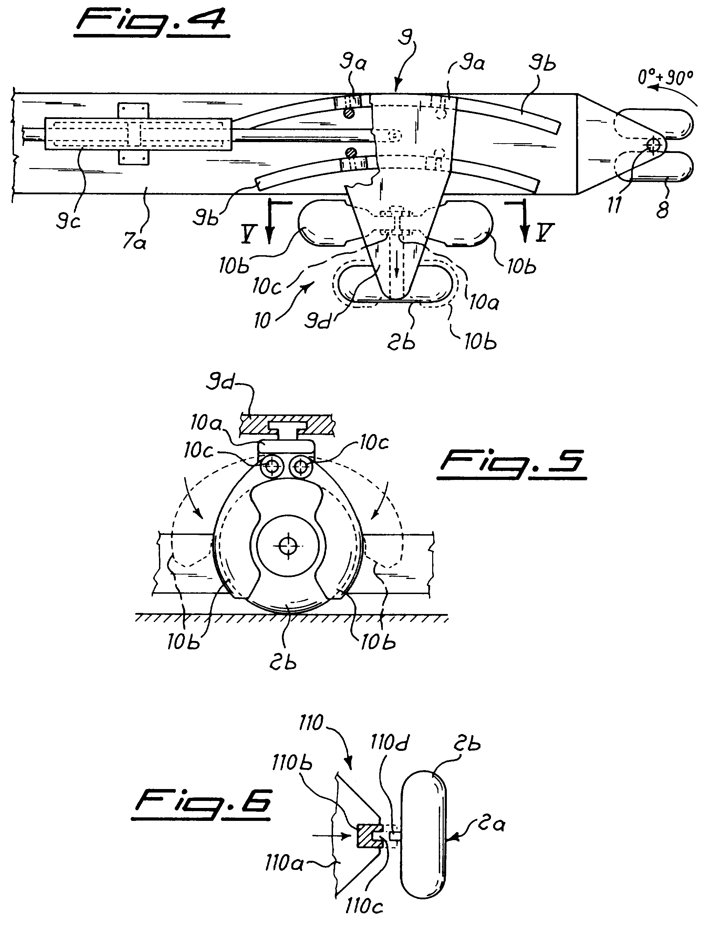

As shown in Figure 1, on the deck 1a of the ship 1, the longitudinal direction of which is indicated by the axis X-X, there is located a grid 1b to which the helicopter 2 must be secured, via its own hitching device 2c, after landing on the deck 1a of the ship. Once it has landed and been hitched up to the grid, the helicopter may be in any position inside the grid, with its longitudinal axis Y-Y at an angle to the longitudinal axis X-X of the ship, with respect to which it must therefore be aligned for subsequent translation inside the hangar 3.

For this purpose the deck 1a is provided with a longitudinal rail 4 extending from inside the hangar as far as the grid 1b. As illustrated in the cross-section of Figure 3, said rail 4 has engageably mounted on it two travel and anti-tilting carriage units 5a which are respectively fixed to the opposite ends of an arm 6a arranged parallel to the longitudinal axis of the ship and forming the first arm of a cross-piece 6, the transverse arm 6b of which is arranged in the vicinity of the opposite end to that for gripping the helicopter.

Said transverse arm 6b of the cross-piece 6 has engageably mounted on it, by means a coupling system consisting of prism-shaped guides, the transverse arm 7b of a U-shaped frame7,the parallel arms 7a of which are arranged parallel to the longitudinal axis X-X of the ship 1.

The U-shaped frame 7 is able to move transversely in either direction, relative to the cross-piece to which it is joined, by means of a hydraulic cylinder 7c arranged between the two said transverse arms 6b, 7b. Each longitudinal arm 7a of the frame 7 carries at its front end two pairs of wheels 8 which rest directly on the deck; said two wheels can be oriented via known means and can be arranged parallel or transversely with respect to the axis X-X of the ship.

Two hydraulic cylinders 11 are located along the vertical axes of rotation of said wheels 8 and enable the front part of the carriage to be raised by a few centimetres.

Moreover, the U-shaped frame is provided, in the vicinity of its own transverse arm 7b, with two pirouetting wheels 7d which also rest on the deck: thus the apparatus rests fully on the deck with a particularly wide and hence very stable resting base.

A carriage unit 9 is provided in the vicinity of the ends of each longitudinal arm 7a of the frame 7, directed towards the helicopter, and carries means 10 for gripping the main wheels 2a of the helicopter 2.

Said carriage units 9 move, by means of suitable roller wheels 9a, on suitable sets of small rails 9b in the form of an arc of a circle having its centre coinciding with the mid-line of the U-shaped frame 7.

The movement of the two carriage units 9 on the respective sets of small rails 9b occurs in opposite directions; this is obtained by means of two double-acting hydraulic cylinders 9c which are suitably connected together hydraulically.

In a first embodiment the gripping means 10 are designed to grip the main landing gear of the helicopter via the corresponding tyres 2b and consist of a suitable carriage 10a which carries the gripping jaws 10b and is able to perform a translatory movement via known means on an arm 9d fixed to the orienting devices 9.

Said jaws 10c can be commanded so as to open and close, causing them to rotate about pins 10d by means of suitable hydraulic cylinders.

The jaws are formed so as to embrace the tyre in two zones such that the tyre itself is secured in the vertical and transverse direction.

It should be noted that the closing movement of the jaws is provided with an end-of-travel device so as to allow the tyre to be embraced without however compressing it.

In a second embodiment (Figure 6) the gripping means 110 consist of an arm 110a on which a block 110b moves transversely, said block being provided with a seat 110c which is coupled with a pin 110d arranged on the wheel 2a of the helicopter; it is obvious moreover how, in a second embodiment, the pin may be integral with the gripping means and a hole may instead be provided on the wheel of the helicopter.

Operation of the apparatus is as follows:

The helicopter 2 lands on the deck 1a and is secured to the grid 1a using its own hitching device 2c.

After landing the helicopter may be positioned laterally with respect to the centre of the grid and with its axis Y-Y located at a certain angle with respect to the axis X-X of the ship.

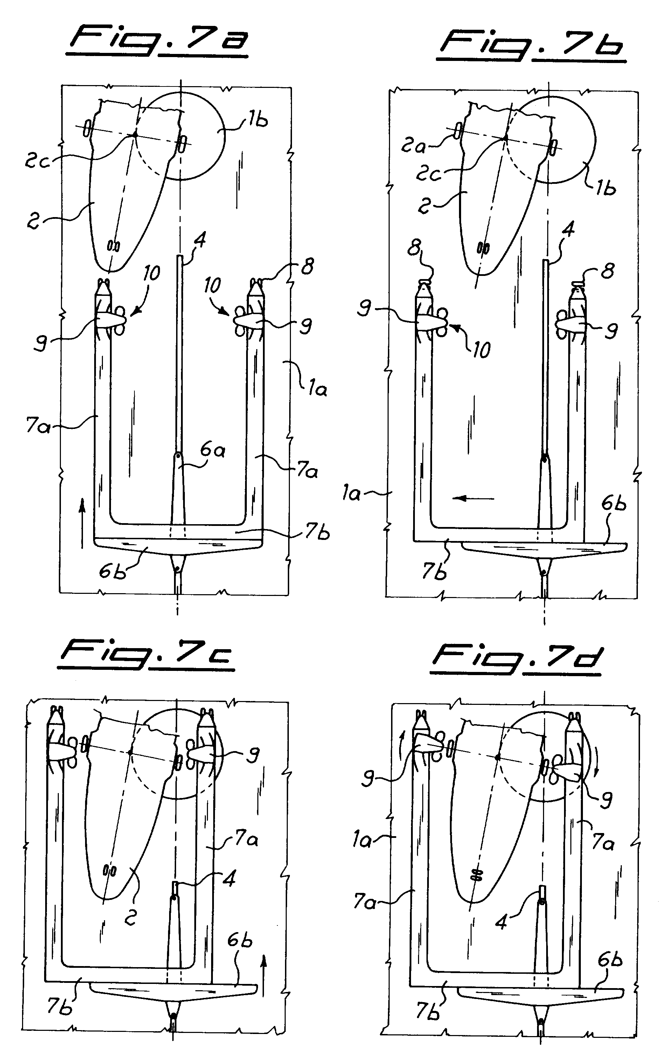

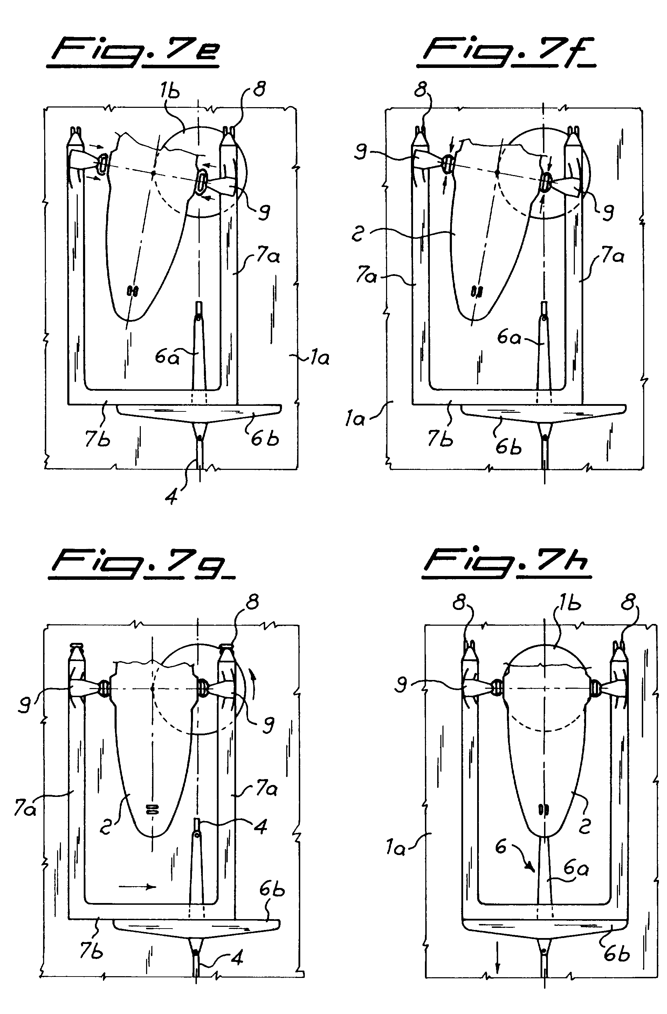

The apparatus emerges from the hangar 3, moving along the rail 4 (Figure 7a); subsequently (Figure 7b) the U-shaped frame 7 moves laterally with respect to the cross-piece 6 via the action of the cylinder 7c and positions itself so that its longitudinal axis coincides with the geometric centre between the two main wheels 2a of the helicopter 2.

At this point the carriage moves further forward (Figure 7c) until the centre of rotation of the carriage units 9 is located opposite the aforementioned wheel centre.

The two carriage units 9 rotate (Figure 7d) in opposite directions until their joining line coincides with the axis of the two main wheel carriages.

The gripping devices 10 then grip the wheels.

In the first embodiment of the gripping means 10 this occurs first (Figure 7e) by translating the carriage unit 10a towards the wheels 2a with respect to the arm 9d and then bringing the pairs of jaws 10b into alignment with the tyres 2b and their exterior; in this position the jaws 10b are then made to rotate about the pins 10c (Figure 7f) and closed around the tyres.

In the second embodiment (Figure 6) representing a solution where the wheel axes are gripped, this is performed simply by translating the block 110b until the pin 110d is inserted into the hole 110c.

The helicopter is now completely gripped by the device and is able to release its hitching device 2c from the grid 1b.

The small hydraulic pistons 9 arranged in the vicinity of the free end of the arms 7a are actuated so that the main wheels of the helicopter are raised from the deck.

The front wheel of the helicopter is turned through 90° and the two carriage units 9 are operated in opposite directions (Figure 7g) so that the helicopter rotates about the centre of the two main wheels until the helicopter axis is parallel with the ship's axis.

Then the cylinder 7b is actuated so as to translate the U-shaped frame 7 laterally with respect to the cross-piece until the axis of the helicopter is brought into alignment with the axis of the hangar.

At this point (Figure 7h) the carriage is translated (after repositioning of the front wheel to 0°) so that the helicopter can be transferred into the hangar.

During the various carriage handling movements the wheels 8 are oriented at 0° or 90° depending on whether the translatory movement is longitudinal or transverse, respectively, while the pivoting wheels 7d are automatically oriented in the required direction.

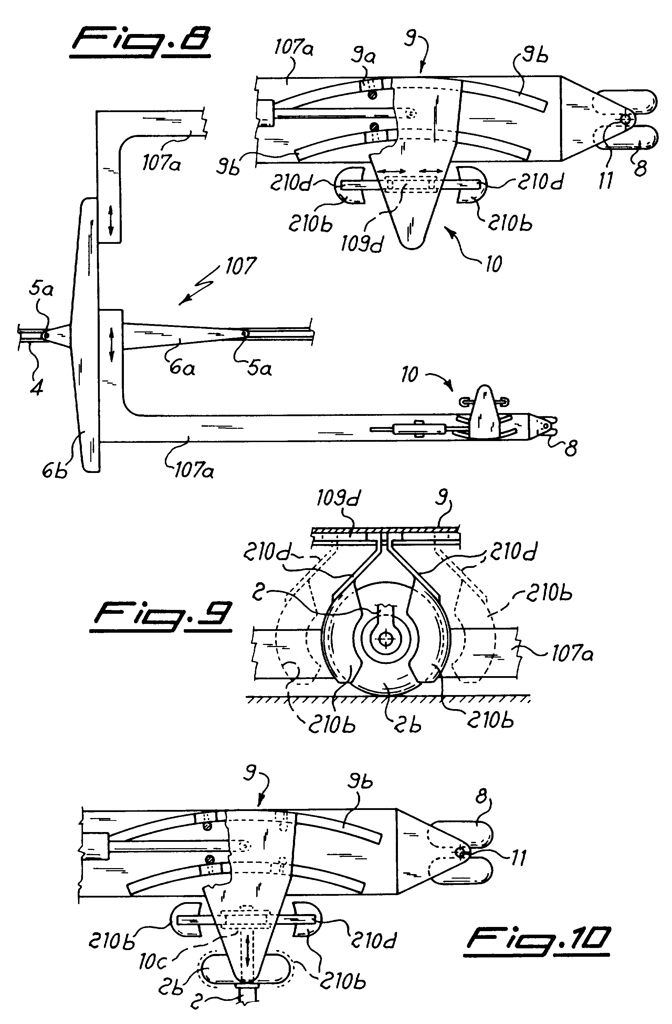

Many variants may be introduced with regard to realization of the parts which make up the invention, without thereby departing from the protective scope of the present invention as defined by the claims which follow; in Figures 8, 9 and 10, for example, further embodiments of the apparatus according to the invention are illustrated.

More particularly, the U-shaped frame 107, illustrated in Fig. 8, has its bottom side divided in half so that the two transverse sections 107b and the respective arms 107a joined thereto form L-shaped elements movable in a transverse direction with respect to the longitudinal axis X-X of the ship, actuation of said L-shaped elements being of a known type and hence not illustrated or described in detail.

As illustrated in Figs. 8, 9 and 10 it is also possible to provide elements for gripping the wheel 2b in the form of jaws 210b supported by arms 210d movable in translation on a longitudinal guide 109d of the arm 9, whereby the possibility of angular orientation with respect to the wheel of the helicopter is obviously maintained.

With the aforementioned configuration of the U-shaped frame 107, the gripping jaws 210b are fixed in the transverse direction (Fig. 9) since the movement towards the wheels 2b, in the transverse direction, is performed by the two L-shaped elements, which, in addition to translating together in the transverse direction relative to the cross-piece 6, as already described with reference to Fig. 7b, are also able to translate with respect to one another so as to bring the gripping means in alignment with the associated wheel 2b of the helicopter.

The jaws 210b, on the other hand, merely have to orient themselves angularly so as to be arranged parallel to the wheels 2b, and close around the latter, by means of a rectilinear relative approach movement, so as to retain the said wheels.

As illustrated in Fig. 10, the jaws 210b which are movable in translation can obviously also be applied to the entire U-shaped frame 7; in this case the longitudinal guide 109d can, for example, be formed on the carriage unit 10c so that the jaws 210b can be actuated both in the transverse direction for movement towards/away from the wheel 2b and in the longitudinal direction for closing around/freeing of the wheel itself.

In the embodiments of the parts which make up the apparatus according to the invention, it may also be envisaged that the transverse movement of the U-shaped structure is actuated by means of mechanical gears of the rack-and-pinion type and that the means for raising the wheels of the helicopter are arranged directly on the gripping means 10 instead of in the region of the pirouetting wheels 8.

## Claims

1. Apparatus for gripping, raising, orienting and transporting helicopters (2) in particular for the decks (1a) of ships (1) provided with longitudinal rails (4) for guiding and constraining in an anti-tilting manner roller wheels (5a) connected to the apparatus, characterized in that it consists of a cross-piece (6) movable in a direction parallel to the longitudinal axis (X-X) of the ship in engagement with said rail (4), the transverse arm (6b) of said cross-piece (6) having joined to it a U-shaped frame (7; 107) which has parallel arms (7a; 107a) arranged parallel to the longitudinal axis (X-X) and is movable relative to the cross-piece (6) in a transverse direction with respect to the longitudinal axis (X-X) itself through the action of associated actuating means (7c), the free ends of said longitudinal arms (7a) of the frame (7) having joined to them the means (10) for gripping the main wheels (2a) of the helicopter (2) with associated orienting devices (9) and means (11) for raising the said ends once coupling and gripping of the wheels themselves has been performed.

2. Apparatus according to Claim 1, characterized in that said cross-piece (6) comprises a longitudinal arm (6a) which is joined to said roller wheels (5a) travelling inside the guide rail (4) and is movable parallel to the longitudinal axis of the ship via the action of associated actuating means, the transverse arm (7b) being joined to said longitudinal arm.

3. Apparatus according to Claim 1, characterized in that the transverse arm (7b) of said U-shaped frame (7) is joined to the transverse arm (6b) of the cross-piece (6) by means of prism-shaped guides on which it is able to travel transversely in either direction moved by a hydraulic cylinder (7c) arranged between said transverse arms of the cross-piece and the frame, respectively.

4. Apparatus according to Claim 1, characterized in that said devices gripping the main wheels of the helicopter consist of pairs of jaws (10b) which are located opposite one another and can be rotated so as to open and close about associated pins (10c) mounted on a carriage unit (10a) travelling transversely with respect to the axis (X-X) of the ship and fixed to an arm (9d) of said device (9) for angular orientation of said gripping means (10) with respect to the longitudinal axis (X-X) of the ship.

5. Apparatus according to Claim 1, characterized in that said devices for gripping the main wheels of the helicopter consist of pairs of jaws (210b) located opposite one another and translatable with respect to one another so as to open/close by means of associated arms (210d) movable on an associated guide (109d) formed on a carriage unit (10a), travelling transversely with respect to the axis (X-X) of the ship, joined to an arm (9d) of said device (9) for angular orientation of said gripping means (10) with respect to the longitudinal axis (X-X) of the ship.

6. Apparatus according to Claim 1, characterized in that said gripping means consist of a block (110b) movable transversely with respect to an arm (110a) fixed to the orienting devices (9), said block being provided with a hole (110c) designed to be coupled with a corresponding pin (110d) integral with the wheels of the helicopter.

7. Apparatus according to Claim 1, characterized in that said devices for angular orientation of the gripping means (10) substantially consist of carriage units (9) mounted on roller wheels (9a) travelling on rails (9b) as a result of the actuating action of an associated cylinder (9c) and carrying an arm (9d) extending radially so as to support said gripping means.

8. Apparatus according to Claims 1 and 6, characterized in that said rails (9b) are in the form of an arc of a circle having its centre on the longitudinal axis of symmetry of the U-shaped frame.

9. Apparatus according to Claim 1, characterized in that said devices for orienting the gripping means perform equal and opposite angular displacements with respect to the position of geometrical alignment.

10. Apparatus according to Claim 1, characterized in that said carriage unit (10a) supporting the gripping means is movable in a radial direction with respect to the arm (9d) for angular orientation, to which it is joined.

11. Apparatus according to Claim 1, characterized in that the free ends of said longitudinal arms (7a) of the U-shaped frame (7) have pairs of wheels (8) for resting on the deck (1a), which can be oriented between 0° and 90° with respect to the longitudinal axis of the ship, a vertical hydraulic cylinder (11) being arranged between the axis of said pairs of wheels and the arms of the U-shaped frame in order to raise the U-shaped frame with respect to the wheels resting on the deck.

12. Apparatus according to Claim 1, characterized in that a pirouetting wheel (7d) for resting on the deck (1a) of the ship (1) is provided at the opposite ends of the transverse arm of the U-shaped frame.

13. Apparatus according to Claim 1, characterized in that said U-shaped frame (107) has its bottom side (107b) divided into two independent sections, each of which is joined to a respective longitudinal arm (107a) with which it forms an "L" movable in the transverse direction with respect to the longitudinal axis (X-X) of the ship.

14. Apparatus according to Claims 1 and 12, characterized in that said devices for gripping the main wheels (2b) of the helicopter consist of pairs of jaws (210b) located opposite one another and translatable with respect to one another so as to open/close, on associated guides (109d) of the said carriage unit (10a) fixed to the device (9) for angular orientation.

15. Apparatus according to Claim 1, characterized in that said means for actuating the U-shaped frame (7; 107) consist of mechanical means of the rack-and-pinion type.

16. Apparatus according to Claim 1, characterized in that said devices for raising the helicopter are directly associated with the devices for gripping the wheels (2b)
